# EUROPÄISCHE PATENTANMELDUNG

(11) **EP 1 184 554 A2**
(43) Veröffentlichungstag der Anmeldung: **06.03.2002**
(21) Anmeldenummer: 01119812.4
(22) Anmeldetag: 16.08.2001
(51) Int. Cl.: F02D 11/10, F02D 41/26

(54) **Fahrzeug mit einem Stellelement für den Ansaugtrakt der Brennkraftmaschine**

(30) Priorität: 31.08.2000 DE 20015004 U
(71) Anmelder: FILTERWERK MANN & HUMMEL GMBH, 71638 Ludwigsburg (DE)
(72) Erfinder: Jessberger, Thomas, 71277 Rutesheim (DE)
(74) Vertreter: Voth, Gerhard, Dipl.-Ing.

(57) **Zusammenfassung**

In einem Fahrzeug mit einem Stellelement für den Ansaugtrakt einer das Fahrzeug antreibenden Brennkraftmaschine wird ein Schrittmotor zur Verstellung des Stellelementes benutzt. Die Ansteuerung dieses Schrittmotors erfolgt über eine Steuerung für ein anderes Aggregat in dem Kraftfahrzeug, wodurch die Motorsteuerung entlastet wird. Diese Maßnahme ist insbesondere dann vorteilhaft, wenn an der Motorsteuerung nicht genügend Anschlüsse für einen Schrittmotor zur Verfügung stehen. Dabei können die Steuerimpulse von der Motorsteuerung ausgehen, während die Ansteuerung des Schrittmotors direkt von der zusätzlichen Steuerung bewältigt wird.

## Beschreibung

### Stand der Technik

Die Erfindung betrifft ein Fahrzeug mit einem Stellelement für den Ansaugtrakt einer Brennkraftmaschine nach der Gattung der Patentansprüche 1 sowie 2.

Stellelemente zum Einsatz im Ansaugtrakt von Brennkraftmaschinen, wie sie eingangs beschrieben wurden, sind bekannt. In der DE 197 11 146 A1 wird z. B. der Einsatz von Schaltklappen in den Einlasskanälen des Saugrohrs zu den Zylindern an einer Brennkraftmaschine beschrieben. Diese werden durch einen elektrischen Motor angetrieben, der diese Klappen stufenlos zu verstellen vermag. Der Antrieb dieser Klappen erfolgt mittels eines Gleichstromsmotors, der über eine komplexe Steuerung betrieben wird, die einerseits ein schnelles Schalten der Schaltklappen und andererseits Zwischenstellungen der Schaltklappen erlaubt.

Um eine komplexe Steuerung zur Positionierung der Schaltklappen zu vermeiden, ist es wünschenswert, einen Schrittmotor zum Antrieb der Klappen zu verwenden. Die Schrittmotoren können über eine Steuerung direkt angesteuert werden, wobei deren Stellung in jedem Betriebszustand bekannt ist. Allerdings sind bei Verwendung von Schrittmotoren mehr elektrische Anschlüsse an der Steuerung notwendig, als bei Verwendung eines Gleichstrommotors. Insbesondere, wenn Motorbaureihen um eine Variante mit Ansteuerung durch Schrittmotor erweitert werden sollen, fehlen diesen zusätzliche Anschlüsse häufig an der Motorsteuerung, an die die Aktuatoren für Schaltklappen des Saugrohrs oder an anderen Stellen des Ansaugtraktes bevorzugt angeschlossen werden.

Aufgabe der Erfindung ist es daher, ein Steuerungskonzept für Schaltklappen im Ansaugtrakt zu schaffen, welches ohne großen Aufwand schon bestehende Fahrzeugkonzepte angepasst werden kann. Diese Aufgabe wird durch die Merkmale des Patentanspruches 1 sowie 2 gelöst.

### Vorteile der Erfindung

Das erfindungsgemäße Fahrzeug weist in bekannter Weise ein Stellelement auf, welches im Ansaugtrakt einer das Fahrzeug antreibenden Brennkraftmaschine zum Einsatz kommt. Das Stellelement wird von einem Schrittmotor angetrieben. Weiterhin ist im Fahrzeug ein anderer Schrittmotor vorgesehen, der eine im Verhältnis zur Steuerung der Ansaugluft in der Brennkraftmaschine untergeordnete Aufgabe bewältigt. Dies kann z. B. die Verstellung einer Klimaanlage sein. Andere denkbare Möglichkeiten für die Verwendung von Schrittmotoren ergeben sich beispielsweise bei einer elektrischen Sitzverstellung, Fensterhebern oder einer elektrischen Leuchtweitenregulierung. Die genannten Aufgaben sind in dem Sinne untergeordnet, dass eine Verstellung des Stellelementes im Ansaugtrakt im bezug auf diese Anwendungen mit Vorrang behandelt werden kann. Der Schaltvorgang im Ansaugtrakt dauert z. B. 500 ms, wobei es für die Funktion der Brennkraftmaschine und den Komfort der Fahrzeuginsassen ohne Bedeutung ist, ob während dieser Zeit eine Aktivierung der genannten untergeordneten Anwendung nicht möglich ist. Diese kann nach Ablauf der Schaltzeit des Stellelementes im Ansaugtrakt der Brennkraftmaschine nachgeholt werden.

Der Schrittmotor der untergeordneten Anwendung weist eine Steuerelektronik auf, die mehrere sequentiell angeordnete Treiberschaltungen enthält. Die Erfindung ist dadurch gekennzeichnet, dass eine dieser Treiberschaltungen genutzt wird, um den Schrittmotor im Ansaugtrakt der Brennkraftmaschine anzutreiben. Um die Vorrangigkeit der Verstellung des Stellelementes im Ansaugtrakt zu gewährleisten, ist diese Treiberschaltung in Abhängigkeit eines Steuersignals zu jeder Zeit ansteuerbar. Das Steuersignal kann z. B. von der Motorsteuerung gesendet werden, welche die Betriebszustände der Brennkraftmaschine auswertet und daraus die notwendige Stellung des Stellelementes im Ansaugtrakt ermitteln kann. Für den Fall, dass der Schrittmotor anstelle eines Gleichstrommotors verwendet werden soll, kann z. B. die Ansteuerung des ehemaligen Gleichstrommotors an der Motorsteuerung verwendet werden, um das Steuersignal für den Schrittmotor zu erzeugen.

Eine alternative Ausgestaltung der Erfindung sieht vor, dass anstelle einer Steuerelektronik mit sequentiell angesteuerten Treiberschaltung eine Steuerelektronik verwendet wird, die die Treiberschaltungen parallel ansteuern kann. Die Notwendigkeit, dass außer dem Stellelement im Ansaugtrakt Verbraucher mit untergeordneter Bedeutung an die Steuerung angeschlossen sind, ist daher nicht notwendig. Alle Anwendungen an den einzelnen Treiberschaltungen der Steuerung können parallel verwendet werden. Aus diesem Grund ist auch bei dieser Ausgestaltung der Erfindung eine Ansteuerung der Treiberschaltung des Stellelementes im Ansaugtraktes zu jeder Zeit möglich.

Im Ansaugtrakt sind Stellelemente mit unterschiedlichen Ausgestaltungen notwendig. Hierbei kann es sich um eine Drosselklappe handeln, die insbesondere bei direkt einspritzenden Motoren in vorteilhafter Weise stufenlos ausgeführt werden kann. Eine andere Möglichkeit ist der Antrieb einer Schaltwalze, die zur stufenlosen Verstellung der Saugkanallängen im Saugrohr verwendet werden kann. Eine andere Anwendung ist z. B. eine Regulierungsklappe im Ansaugtrakt zur stufenweisen Zumischung von Warmluft zu der Ansaugluft.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Beschreibung der Ausführungsbeispiele

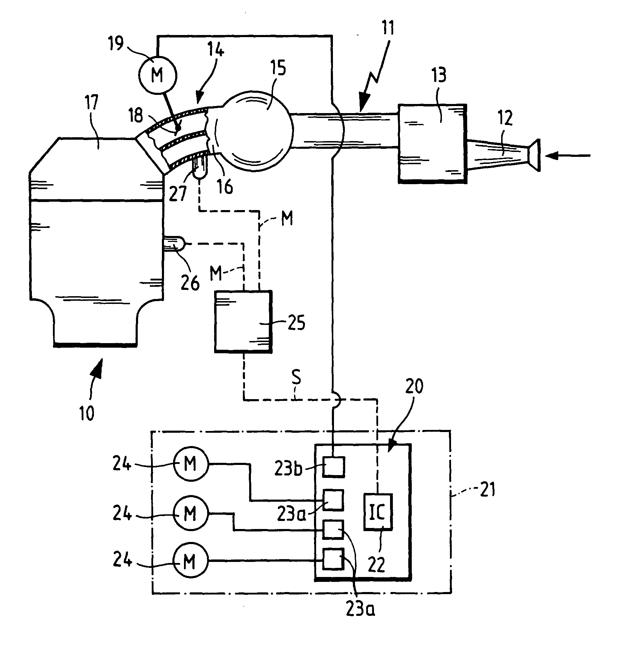

Die einzige Figur zeigt schematisch eine Brennkraftmaschine 10 mit angeschlossenem Ansaugtrakt 11, enthaltend einen Ansaugstutzen 12 für Rohluft, ein Luftfilter 13 und ein Saugrohr 14 mit Sammelraum 15 und Saugkanälen 16, die zu einem Zylinderkopf 17 der Brennkraftmaschine 10 führen. Im Ansaugtrakt ist weiterhin ein Stellelement 18 in Form einer Klappe zur selektiven Abschaltung der Saugkanäle 16 untergebracht, welche durch einen ersten Schrittmotor 19 angetrieben wird. Der Schrittmotor 19 ist an eine Steuerung 20 angeschlossen, welche in einer nicht näher dargestellten Klimaanlage 21 eingebaut ist. Die Steuerung weist eine Steuerelektronik 22 und Treiberschaltungen 23 a, b auf.

In die Klimaanlage sind weiterhin weitere Schrittmotoren 24 angeordnet, welcher zur Verstellung von Luftkanälen in der Klimaanlage gedacht sind. Diese sind an die Treiberschaltungen 23a angeschlossen. Weiterhin steht in der Klimaanlage eine weitere Treiberschaltung 23b zur Verfügung, die durch Bauteile der Klimaanlage nicht genutzt wird. Diese Treiberschaltung dient zur Ansteuerung des ersten Schrittmotors 19 für das Stellelement.

Eine Motorsteuerung 25 wertet Messsignale M aus, die z. B. mit Hilfe eines Drehzahlsensors 26 und eines Luftmassesensors 27 ermittelt werden können. Die Motorssteuerung generiert ein Steuersignal S, welches der Steuerelektronik 22 zugeführt wird. Sobald eine Verstellung des Stellelementes 18 notwendig ist, sendet die Motorsteuerung 25 ein entsprechendes Steuersignal, welches durch die Steuerelektronik mit Vorrang behandelt wird. Diese gibt das Steuersignal an die Treiberschaltung 23b weiter, unabhängig davon, ob die weiteren Schrittmotoren 24 in dieser Zeit eine evtl. Aktivität unterbrechen müssen.

## Patentansprüche

1. Fahrzeug mit einem Stellelement (18) für den Ansaugtrakt einer das Fahrzeug antreibenden Brennkraftmaschine mit einer Motorsteuerung (25),
- wobei das Stellelement zum Antrieb mit einem ersten Schrittmotor (19) versehen ist,
- wobei im Fahrzeug ein weiterer Schrittmotor (24) für eine im Verhältnis zur Betätigung des Stellelementes (18) untergeordnete Aufgabe angeordnet ist und
- wobei dem weiteren Schrittmotor (24) eine weitere Steuerung (20), enthaltend eine Steuerelektronik (22) und mehrere sequentiell angesteuerte Treiberschaltungen (23a) zum Anschluss von Schrittmotoren, zugeordnet ist,
**dadurch gekennzeichnet, dass** der erste Schrittmotor (24) an eine der Treiberschaltungen angeschlossen ist, wobei diese Treiberschaltung (23b) in Abhängigkeit eines Steuersignals (S) zu jeder Zeit ansteuerbar ist.

2. Fahrzeug mit einem Stellelement (18) für den Ansaugtrakt einer das Fahrzeug antreibenden Brennkraftmaschine mit einer Motorsteuerung (25),
- wobei das Stellelement zum Antrieb mit einem ersten Schrittmotor (19) versehen ist,
- wobei im Fahrzeug ein weiterer Schrittmotor (24) für eine andere Aufgage angeordnet ist und
- wobei dem weiteren Schrittmotor (24) eine weitere Steuerung (20), enthaltend eine Steuerelektronik (22) und mehrere parallel angesteuerte Treiberschaltung (23a, b) zum Anschluss von Schrittmotoren, zugeordnet ist,
**dadurch gekennzeichnet, dass** der erste Schrittmotor (24) an eine der Treiberschaltungen angeschlossen ist, wobei diese Treiberschaltung (23b) in Abhängigkeit eines Steuersignals (S) zu jeder Zeit ansteuerbar ist.

3. Fahrzeug nach einem der vorherigen Ansprüche, **dadurch gekennzeichnet, dass** das Steuersignal (S) zur Aktivierung des ersten Schrittmotors (19) von der Motorsteuerung (25) stammt.

4. Fahrzeug nach einem der vorherigen Ansprüche, **dadurch gekennzeichnet, dass** die weitere Steuerung (20) für die Schrittmotoren einer Klimaanlage (21) vorgesehen ist.
